# EUROPEAN PATENT SPECIFICATION

(11) **EP 2 086 750 B1**
(45) Date of publication and mention of the grant of the patent: **05.01.2011**
(21) Application number: 07834559.2
(22) Date of filing: 26.09.2007
(51) Int. Cl.: B29D 30/20, B29D 30/30

(54) **ASSEMBLY FOR AND METHOD OF MAKING A TYRE COMPONENT**
ANORDNUNG UND VERFAHREN ZUR HERSTELLUNG EINER REIFENKOMPONENTE
ENSEMBLE PERMETTANT DE PRODUIRE UN COMPOSANT DE PNEU ET PROCÉDÉ DE PRODUCTION D'UN COMPOSANT DE PNEU

(30) Priority: 16.10.2006 NL 1032683
(43) Date of publication of application: 12.08.2009
(73) Proprietor: VMI Holland B.V., 8161 RK Epe (NL)
(72) Inventor: SLOTS, Antonie, 8111 RS Heeten (NL)
(74) Representative: Peters, Sebastian Martinus
(86) International application number: PCT/NL2007/000243
(87) International publication number: WO 2008/048089

(56) References cited:
- EP-A1- 0 597 125
- EP-A2- 1 106 335
- WO-A-2004/041520
- DE-C1- 19 918 523
- GB-A- 229 423
- US-A- 5 385 626

## Description

### BACKGROUND OF THE INVENTION

The invention relates to an assembly for making at least a part of a tyre.

Such an assembly is for instance known from International Patent Application WO 97/28957. Said known assembly among others comprises a belt building drum, a tread building drum and a carcass drum, and a belt layer server, a tread server and a carcass material server, respectively, for supplying a tyre component in question to the related building drum.

In order to meet all, often strict, requirements made by the automobile industry, it is necessary for an assembly for making at least a part of a tyre that the axes of rotation of the various building drums are positioned highly accurately with respect to each other. An optional horizontal displacement of a building drum then takes place over an equally accurately manufactured transport rail, so that the mutual positioning of the various building drums is maintained.

In cases in which, such as for instance in WO 97/28957, the carcass building unit contains two spaced apart carcass drums that are rotatable about a common shaft, the carcass building unit has two operative positions in which carcass material can be arranged on the carcass drum in question. Said operative positions are formed by a first operative position in which the one carcass drum is centred with respect to the other building drums for the other tyre components (such as the tread and the belt layer), and a second operative position in which the other carcass drum is centred with respect to the other building drums. The rotation of the carcass drums about their common shaft until in the operative position in question then needs to take place highly accurately in order to, in the operative positions, achieve a correct alignment with the other building drums.

In all known assemblies for making at least a part of a tyre such an accurate alignment for achieving a proper tyre is usual. EP 0 223 317 and WO 05/039864 are referred to here as examples.

In said known assemblies the servers, with which the various tyre components are transferred to the building drums in question, are usually designed so as to be movable. That means that the servers are designed so as to be movable (as regards height and in longitudinal direction of the supply direction) in the direction of the building drums. In this way tyres, for instance car or airplane tyres that meet the requirements made by the industry in question, can be manufactured using the known mutually aligned building drums and the movable servers.

The European patent application EP 1106335 - A discloses a tire manufacturing plant comprising two building drums, which are movable one with respect to the other, in such a manner that they can be coaxial or with their axis out of line but parallel.

The patent application GB 229423 - A describes a tire building drum which is vertically movable from a stand-by position to an operative position in contact with the device for conveying the tire component.

### SUMMARY OF THE INVENTION

Although the known assemblies satisfactorily meet the requirements made by the industry in question, there is a continuous need for improvement of the assemblies for increasing the quality of the tyres produced, wherein it is also desirable to reduce the cost price of the assemblies or to keep said price within limits.

The present invention complies with said need by providing an assembly for making at least a part of a tyre as defined in claim 1, the assembly comprising a first conveyor device for conveying a first tyre component; a first building unit having a first building drum, wherein the first building drum is placed in an operative position for picking up the first tyre component conveyed by the first conveyor device, wherein the first building drum has a first axis of rotation; a second conveyor device for conveying a second tyre component, which second tyre component differs from the first tyre component; a second building unit having a second building drum, wherein the second building drum is placed in an operative position for picking up the second tyre component conveyed by the second conveyor device, wherein the second building drum has a second axis of rotation, transfer means for transferring tyre components between the first and second building drum, wherein at least one of the building drums can be placed in an operative position in which the axis of rotation of said one building drum is out of line, but parallel, with the axis of rotation of the other building drum placed in an operative position in question. Particularly at least one of the building drums can be placed in several operative positions, wherein in at least one of the operative positions of the one building drum, the axis of rotation of said one building drum is out of line, but parallel, with the axis of rotation of the other building drum placed in an operative position in question. Indeed by deviating from the mutual alignment of the first and second building drum (at least in their operative positions), which up until now was considered necessary for such assemblies, and on the other hand providing at least one building drum that can be placed in several operative positions, wherein at least one of the operative positions is not aligned with respect to the operative positions of the other building drums, the present invention provides the opportunity to considerably reduce the cost price of such assemblies, whereas moreover the quality of the tyres produced remains at least the same. For instance simpler servers can be used, as they need not be designed so as to be movable towards the building drum.

In an advantageous embodiment of an assembly according to the invention the means comprises a transfer ring, said transfer ring being movable to a position that is coaxial around the first and/or second building drum, or, vice versa, the first and/or second building drum being movable to a position that is coaxial within the transfer ring. In particular the transfer ring and/or the building drums are movable over a guide rail or path.

Although the building drum can be moved to an operative position via a curved line or a composite motion, a fast movement to an operative position can be realised when a building drum is vertically movable, transverse to its axis of rotation, to an operative position in question.

It turned out that in most cases sufficient economic and technical advantage are achieved with the building drum vertically movable to an operative position in question.

In one embodiment of an assembly according to the invention the building drum is arranged on a drum drive seat that is movable along vertically placed guides. The movement of the building drum or said drum drive seat, is particularly realised by a spindle nut structure driven by a servomotor. In this way a highly accurate movement to an operative position can be realised.

In that case it will be advantageous when the movement of the building drum transverse to its axis of rotation is controlled by a computer loaded with software. In order for it to be possible that several types of tyres and/or tyres having various diameters can be manufactured by an assembly according to the invention, it is advantageous when the building drum is detachably arranged on the drum drive seat. In that way various building drums can be arranged on a common drum drive seat. It is also advantageous here when the computer is provided with an entry means for an operator to enter a parameter in the software. Advantageously the building drum diameter can be entered as a parameter.

The invention further relates to a method of making at least a part of a tyre as defined in claim 9, the assembly comprising the steps of providing a first conveyor device for conveying a first tyre component; providing a first building unit having a first building drum, placing the first building drum in an operative position for picking up the first tyre component conveyed by the first conveyor device, wherein the first building drum has a first axis of rotation; providing a second conveyor device for conveying a second tyre component, which second tyre component differs from the first tyre component; providing a second building unit having a second building drum, placing the second building drum in an operative position for picking up the second tyre component conveyed by the second conveyor device, wherein the second building drum has a second axis of rotation, providing transfer means for transferring tyre components between the first and second building drum, placing at least one of the building drums in an operative position in which the axis of rotation of said one building drum is vertically moved out of line, but parallel, with the axis of rotation of the other building drum placed in an operative position in question.

The aspects and measures described in this description and claims of the application and/or shown in the drawings of this application may where possible also be used individually. Said individual aspects, such as moving the building drums beyond alignment, but still parallel, with respect to each other, moving the building drum transverse to its axis of rotation, and other aspects may be the subject of divisional patent applications relating thereto. This particularly applies to the measures and aspects described per se in the sub claims.

### SHORT DESCRIPTION OF THE DRAWINGS

The invention will be elucidated on the basis of a number of exemplary embodiments shown in the attached drawings, in which:
Figure 1 shows a schematic side view of a known assembly for manufacturing at least a part of a tyre;
Figure 2 shows a schematic side view of an embodiment of an assembly according to the present invention; and
Figure 3 shows a schematic top view of the assembly shown in figure 1.

### DETAILED DESCRIPTION OF THE DRAWINGS

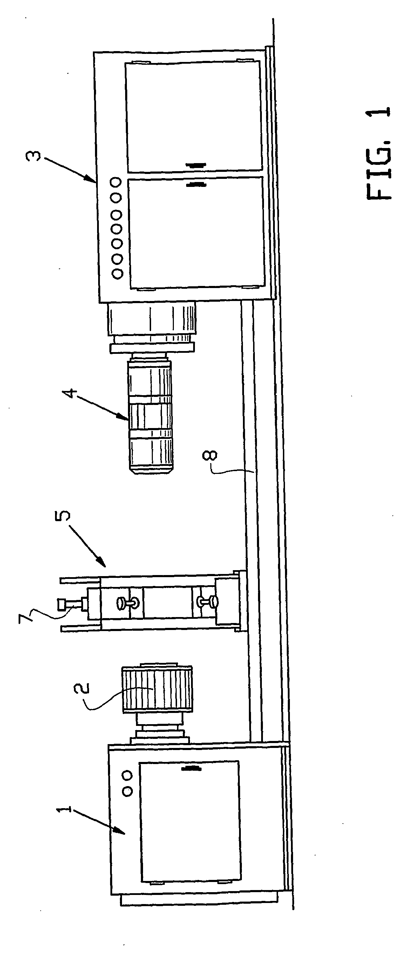

Figure 1 is a schematic side view of a known assembly for manufacturing at least a part of a tyre. The known assembly is provided with a first building unit 1 having a first building drum 2 for building up an unshown belt plus tread (forming a first tyre component) for a pneumatic tyre. The assembly is furthermore provided with a second building unit 3 differing from the first building drum, which second building unit 3 has a second building drum 4 for building up or positioning an unshown, only partially expanded carcass (forming a second tyre component differing from the first tyre component) for a pneumatic tyre. The known assembly is also provided with a transfer ring 5 known per se that can be moved over a guide rail or path 8 towards and out of a position wherein the transfer ring 5 extends coaxially around the first building drum 2 with the belt plus tread thereon. The transfer ring 5 is provided with segments (not shown) that can be radially moved to the inside by cylinders 7 in order to clamp the belt plus tread within the segments and as a result carry them.

In order to meet the, often strict, requirements made by the automobile industry, the transfer ring 5 in this known assembly is accurately centred with respect to both the first building drum 2 and the second building drum 4. The transport rail or path 8 is made accurately to such an extent that the movement of the transfer ring 5 takes place such that the centring of the transfer ring 5 with respect to the first building drum 2 and the second building drum 4 is maintained during the movement of the transfer ring 5 over the transport rail or path 8. The centring of the transfer ring 5 with respect to for instance the second building drum or carcass drum 4 is important because the belt plus tread need to be as concentric as possible to the bead wire bundles in the carcass.

In some cases, such as for instance described in WO 97/28957, the carcass building unit 3 comprises two spaced apart carcass drums that are rotatable about a common shaft (it is observed that although said carcass drums are separate drums, they are intended for one and the same tyre component, namely the carcass). Said building drum unit 3 has such a drive that there is only one operative position the carcass drums can be in. Said operative position is defined by the position that the building drums take when a tyre component is supplied to the building drum by a conveyor device (not shown in figure 1). In said operative position the building drum is arranged stationary with respect to the conveyor device, although the building drum is still able to rotate about its centre line. In the assembly described in WO 97/28957 the first carcass building drum is placed in turn in the operative position after which the tyre components in question are arranged on the first carcass building drum, after which the first carcass building drum is rotated away and the second carcass building drum is rotated in the operative position, so that the tyre components in question can be arranged thereon. In order to meet all, often strict, requirements made by the automobile industry, said operative position also has to be accurately centred with respect to the transfer ring and the first building drum, intended for another tyre component than the carcass.

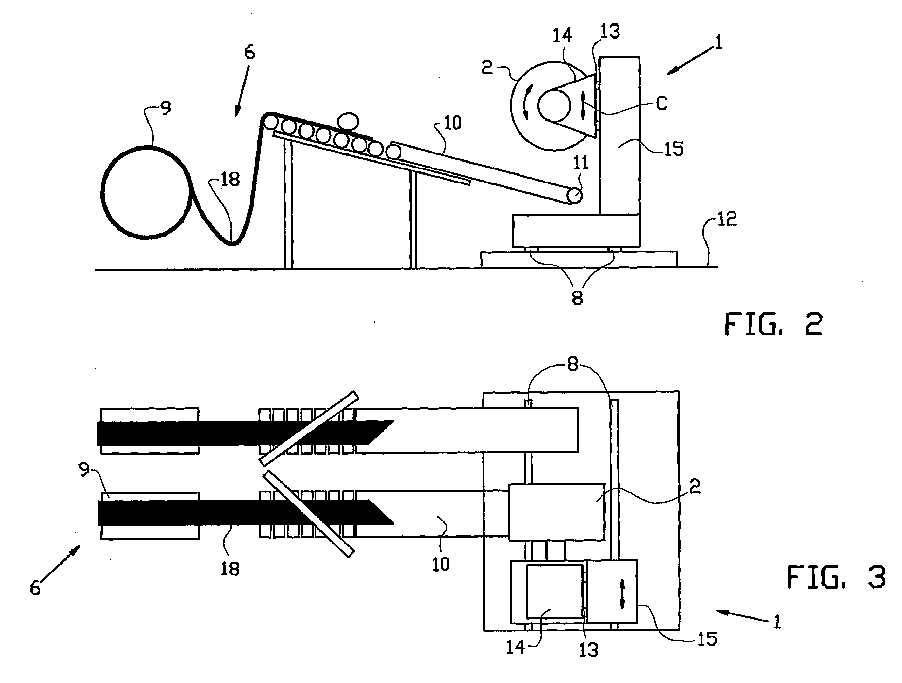

Figure 2 shows a schematic side view of an embodiment of an assembly according to the present invention. Figure 3 shows a schematic top view of the inventive assembly shown in figure 1. In the figures 2 and 3 only the first building unit 1 is shown, although to an expert it will be clear that there is also a second building unit, and that the invention can also be applied to said second building unit (not shown in figures 2 and 3). According to an embodiment of the invention the transfer means, preferably comprising a transfer ring, can be present for transferring tyre components between the first and second building drum. Said transfer ring can be movable to a position that is coaxial around the first and/or second building drum, in order to take over tyre components of the respective building drum. Vice versa, the first and/or second building drum could in the alternative or additionally be movable to a position that is coaxial within the transfer ring. In particular the transfer ring and/or the building drums are movable over a guide rail or path.

The inventive assembly comprises a conveyor device 6 for conveying a belt 18 from a stock roll 9 to the building drum 2. The conveyor device 6 contains at least one conveyor belt 10, or an equivalent means, from which the cut-to-length belt is immediately transferred on the building drum 2. Said conveyor belt 10 is placed stationary with respect to the building unit 1, that means the end 11 of the conveyor belt 10 is stationary with respect to the floor 12 on which the inventive assembly has been placed.

The conveyor device 6 may contain several adjacent conveyor belts for supplying various tyre components to the building drum. In order to move to the conveyor belts in question, the inventive assembly may contain a transport rail or path 8 known per se, over which the building drum 2 can be moved.

In order to ensure that a belt conveyed by the conveyor belt 10 is transferred on the building drum 2, the building drum 2 can be vertically moved until in an operative position immediately above the end of the conveyor belt 10. Said vertical movement is shown in figure 2 by arrow C. For realising the vertical drive in one embodiment, the building drum 2 is arranged on a drum drive seat 14 that is movable along vertically placed guides 13. In order to ensure an accurate vertical movement and simultaneously making a locking and/or retaining of the building drum 2 in any vertical operative position possible, the movement of the drum drive seat 14 is realised by a spindle nut structure (not shown in the figures) driven by for instance a servomotor.

Because the building drum 2 is arranged so as to be vertically movable, it is possible to arrange the conveyor belt 10 stationary with respect to the floor on which the assembly has been placed, as for the transfer of the belt from the conveyor belt 10 on the building drum 2 it is the building drum 2 that is moved and not the end 11 of the conveyor belt 10. In this way the costs of the inventive assembly are reduced, as for each conveyor device no means are necessary for ensuring that the conveyor belts are movable to the building drum. Because in such assemblies for manufacturing at least a part of a tyre often several conveyor belts are present, such a cost reduction may be considerable.

The movement of the building drum 2 in vertical direction is controlled by a computer loaded with software. Said computer is provided with an entry means for an operator to enter a parameter. The diameter of the building drum 2 can be entered as one of the parameters in said software. As a result it is automatically possible, automatically meaning computer controlled, that in case of a smaller diameter of the building drum 2 the vertical movement of the building drum 2 takes place over a larger distance in order for the end 11 of the conveyor belt 10 being approached in a desirable manner.

For instance the thickness of the belt component conveyed on the conveyor belt 10 may also be entered as another parameter.

Although in figure 2 a building drum 2 is shown which in vertical direction C is able to take various operative positions related to the height with respect to floor on which the assembly has been placed, it will be clear to an expert that in another embodiment the building drum 2 can also be horizontally moved into various operative positions, wherein said operative positions have another distance to the vertical support 15 of the building unit 1.

When the inventive assembly is operational, so that a method for making at least a part of a tyre is carried out, due to the vertical movement of the building drum 2 into a related operative position, said building drum 2 will be placed out of line, but parallel, with respect to the axis of rotation of another building drum present in the assembly. Said placement out of line is fully contrary to what was up until now considered usual and necessary in assemblies and methods for making at least a part of a tyre.

The above description is included to illustrate the operation of preferred embodiments of the invention and not to limit the scope of the invention.

## Claims

1. Assembly for making at least a part of a tyre, the assembly comprising:
a first conveyor device (6,10) for conveying a first tyre component;
a first building unit (1) having a first building drum (2), wherein the first building drum is placed in an operative position for picking up the first tyre component conveyed by the first conveyor device, wherein the first building drum has a first axis of rotation;
a second conveyor device for conveying a second tyre component, which second tyre component differs from the first tyre component;
a second building unit (3) having a second building drum (4), wherein the second building drum is placed in an operative position for picking up the second tyre component conveyed by the second conveyor device, wherein the second building drum has a second axis of rotation,
transfer means for transferring tyre components between the first and second building drum,
wherein at least one of the building drums (2,4) can be placed in an operative position in which the axis of rotation of said one building drum is out of line, but parallel, with the axis of rotation of the other building drum placed in an operative position in question, said at least one of the building drums (2,4) being **characterized in that** it is vertically movable, transverse to its axis of rotation, to an operative position in question.

2. Assembly according to claim 1, wherein the building drum (2,4) is arranged on a drum drive seat (14) that is movable along vertically placed guides (13).

3. Assembly according to claim 1 or 2, wherein the movement Is realised by a spindle nut structure driven by a servomotor.

4. Assembly according to any one of the preceding claims, wherein at least one of the building drums (2,4) can be placed in several operative positions; wherein in at least one of the operative positions of the one building drum, the axis of rotation of said one building drum is out of line, but parallel, with the axis of rotation of the other building drum placed in an operative position in question.

5. Assembly according to claim 4, wherein the transfer means comprises a transfer ring (5), said transfer ring being movable to a position that is coaxial around the first and/or second building drum (2,4), or, vice versa, the first and/or second building drum (2,4) being movable to a position that is coaxial within the transfer ring (5).

6. Assembly according to any one of the preceding claims, wherein the movement of the building drum (2,4) transverse to its axis of rotation is controlled by a computer loaded with software.

7. Assembly according to claim 6, wherein the computer is provided with an entry means for an operator to enter a parameter in the software.

8. Assembly according to claim 7, wherein the building drum diameter can be entered as a parameter.

9. Method of making at least a part of a tyre, the assembly comprising the steps of:
providing a first conveyor device (6,10) for conveying a first tyre component;
providing a first building unit (1) having a first building drum (2), placing the first building drum (2) in an operative position for pickin up the first tyre component conveyed by the first conveyor device (6,10), wherein the first building drum (2) has a first axis of rotation;
providing a second conveyor device for conveying a second tyre component, which second tyre component differs from the first tyre component;
providing a second building unit (3) having a second building drum (4) placing the second building drum in an operative position for picking up the second tyre component conveyed by the second conveyor device, wherein the second building drum (4) has a second axis of rotation,
providing transfer means (5) for transferring tyre components between the first (2) and second (4) building drum,
vertically moving at least one of the building drums (2,4) in an operative position in which the axis of rotation of said one building drum is out of line, but parallel, with the axis of rotation of the other building drum placed in an operative position in question.

## Patentansprüche

1. Baugruppe zur Herstellung mindestens eines Teils eines Reifens, wobei die Baugruppe Folgendes umfasst:
eine erste Beförderungsvorrichtung (6, 10) zur Beförderung einer ersten Reifenkomponente;
eine erste Aufbaueinheit (1) mit einer ersten Aufbautrommel (2), wobei die erste Aufbautrommel in einer operativen Stellung für die Aufnahme der von der ersten Beförderungsvorrichtung beförderten ersten Reifenkomponente platziert ist, wobei die erste Aufbautrommel eine erste Rotationsachse aufweist;
eine zweite Beförderungsvorrichtung zur Beförderung einer zweiten Reifenkomponente, wobei sich die zweite Reifenkomponente von der ersten Reifenkomponente unterscheidet;
eine zweite Aufbaueinheit (3) mit einer zweiten Aufbautrommel (4), wobei die zweite Aufbautrommel in einer operativen Stellung für die Aufnahme der von der zweiten Beförderungsvorrichtung beförderten zweiten Reifenkomponente platziert ist, wobei die zweite Aufbautrommel eine zweite Rotationsachse aufweist;
Transfermittel für den Transfer von Reifenkomponenten zwischen der ersten und der zweiten Aufbautrommel, wobei mindestens eine der Aufbautrommeln (2, 4) in einer operativen Stellung platziert werden kann, in der die Rotationsachse der einen Aufbautrommel nicht in einer Linie mit, aber parallel zur Rotationsachse der anderen in einer entsprechenden operativen Stellung platzierten Aufbautrommel angeordnet ist,
wobei die mindestens eine der Aufbautrommeln (2, 4) **dadurch gekennzeichnet ist, dass** sie vertikal, quer zu ihrer Rotationsachse, in eine entsprechende operative Stellung beweglich ist.

2. Baugruppe gemäß Anspruch 1, wobei die Aufbautrommel (2, 4) auf einem Trommelantriebssitz (14) angeordnet ist, der entlang vertikal platzierter Führungen (13) beweglich ist.

3. Baugruppe gemäß Anspruch 1 oder 2, wobei die Bewegung durch eine von einem Servomotor angetriebene Spindelmutterstruktur verwirklicht wird.

4. Baugruppe gemäß einem der vorangehenden Ansprüche, wobei mindestens eine der Aufbautrommeln (2, 4) in mehreren operativen Stellungen platziert werden kann, wobei in mindestens einer der operativen Stellungen der einen Aufbautrommel die Rotationsachse der einen Aufbautrommel nicht in einer Linie mit, aber parallel zur Rotationsachse der anderen in einer entsprechenden operativen Stellung platzierten Aufbautrommel angeordnet ist.

5. Baugruppe gemäß Anspruch 4, wobei das Transfermittel einen Transferring (5) umfasst, welcher Transferring in eine Position bewegt werden kann, die koaxial um die erste und/oder zweite Aufbautrommel (2, 4) ist, oder umgekehrt die erste und/oder zweite Aufbautrommel (2, 4) in eine Position bewegt werden kann, die koaxial innerhalb des Transferrings (5) ist.

6. Baugruppe gemäß einem der vorangehenden Ansprüche, wobei die Bewegung der Aufbautrommel (2, 4) quer zu ihrer Rotationsachse von einem mit Software geladenen Computer gesteuert wird.

7. Baugruppe gemäß Anspruch 6, wobei der Computer mit einem Eingabemittel zum Eingeben eines Parameters in die Software durch eine Bedienperson ausgerüstet ist.

8. Baugruppe gemäß Anspruch 7, wobei der Aufbautrommeldurchmesser als Parameter eingegeben werden kann.

9. Verfahren zur Herstellung mindestens eines Teils eines Reifens, wobei das Verfahren folgende Schritte umfasst:
Bereitstellen einer ersten Beförderungsvorrichtung (6, 10) zur Beförderung einer ersten Reifenkomponente;
Bereitstellen einer ersten Aufbaueinheit (1) mit einer ersten Aufbautrommel (2), Platzieren der ersten Aufbautrommel (2) in eine operative Stellung für die Aufnahme der von der ersten Beförderungsvorrichtung (6, 10) beförderten ersten Reifenkomponente, wobei die erste Aufbautrommel (2) eine erste Rotationsachse aufweist;
Bereitstellen einer zweiten Beförderungsvorrichtung zur Beförderung einer zweiten Reifenkomponente, wobei sich die zweite Reifenkomponente von der ersten Reifenkomponente unterscheidet;
Bereitstellen einer zweiten Aufbaueinheit (3) mit einer zweiten Aufbautrommel (4), Platzieren der zweiten Aufbautrommel in eine operative Stellung für die Aufnahme der von der zweiten Beförderungsvorrichtung beförderten zweiten Reifenkomponente, wobei die zweite Aufbautrommel (4) eine zweite Rotationsachse aufweist;
Bereitstellen von Transfermitteln (5) für den Transfer von Reifenkomponenten zwischen der ersten (2) und der zweiten (4) Aufbautrommel,
vertikales Bewegen mindestens einer der Aufbautrommeln (2, 4) in eine operative Stellung, in der die Rotationsachse der einen Aufbautrommel nicht in einer Linie mit, aber parallel zur Rotationsachse der anderen in einer entsprechenden operativen Stellung platzierten Aufbautrommel angeordnet ist.

## Revendications

1. Ensemble pour réaliser au moins une partie d'un pneu, l'ensemble comprenant :
■ un premier dispositif de convoyeur (6, 10) pour transporter un premier composant de pneu ;
■ une première unité de confection (1) ayant un premier tambour de confection (2), dans lequel le premier tambour de confection est placé dans une position opérationnelle pour prélever le premier composant de pneu transporté par le premier dispositif de convoyeur, dans lequel le premier tambour de confection a un premier axe de rotation ;
■ un deuxième dispositif de convoyeur pour transporter un deuxième composant de pneu, lequel deuxième composant de pneu est différent du premier composant de pneu ;
■ une deuxième unité de confection (3) ayant un deuxième tambour de confection (4), dans lequel le deuxième tambour de confection est placé dans une position opérationnelle pour prélever le deuxième composant de pneu transporté par le deuxième dispositif de convoyeur, dans lequel le deuxième tambour de confection a un deuxième axe de rotation,
■ des moyens de transfert pour transférer des composants de pneu entre les premier et deuxième tambours de confection,
dans lequel au moins l'un des tambours de confection (2, 4) peut être placé dans une position opérationnelle dans laquelle l'axe de rotation dudit un tambour de confection n'est pas aligné, mais parallèle à l'axe de rotation de l'autre tambour de confection placé dans une position opérationnelle en question, ledit au moins un des tambours de confection (2, 4) étant **caractérisé en ce qu'**il est verticalement mobile, transversal par rapport à son axe de rotation, jusqu'à une position opérationnelle en question.

2. Ensemble selon la revendication 1, dans lequel le tambour de confection (2, 4) est agencé sur un siège d'entraînement de tambour (14) qui est mobile le long de guides (13) placés verticalement.

3. Ensemble selon la revendication 1 ou 2, dans lequel le mouvement est réalisé par une structure d'écrou de moyeu entraînée par un servomoteur.

4. Ensemble selon l'une quelconque des revendications précédentes, dans lequel au moins l'un des tambours de confection (2, 4) peut être placé dans plusieurs positions opérationnelles, dans lequel dans au moins l'une des positions opérationnelles du tambour de confection, l'axe de rotation dudit tambour de confection n'est pas aligné, mais parallèle à l'axe de rotation de l'autre tambour de confection placé dans une position opérationnelle en question.

5. Ensemble selon la revendication 4, dans lequel les moyens de transfert comprennent une bague de transfert (5), ladite bague de transfert étant mobile jusqu'à une position qui est coaxiale autour du premier et/ou du deuxième tambour de confection (2, 4) ou vice versa, le premier et/ou le deuxième tambour de confection (2, 4) étant mobile dans une position qui est coaxiale par rapport à l'intérieur de la bague de transfert (5).

6. Ensemble selon l'une quelconque des revendications précédentes, dans lequel le mouvement du tambour de confection (2, 4) transversal par rapport à son axe de rotation est contrôlé par un ordinateur chargé avec un logiciel.

7. Ensemble selon la revendication 6, dans lequel l'ordinateur est prévu avec des moyens d'entrée pour un opérateur afin d'entrer un paramètre dans le logiciel.

8. Ensemble selon la revendication 7, dans lequel le diamètre du tambour de confection peut être entré en tant que paramètre.

9. Procédé pour fabriquer au moins une partie d'un pneu, l'ensemble comprenant les étapes consistant à :
■ prévoir un premier dispositif de convoyeur (6, 10) pour transporter un premier composant de pneu ;
■ prévoir une première unité de confection (1) ayant un premier tambour de confection (2), plaçant le premier tambour de confection (2) dans une position opérationnelle pour prélever le premier composant de pneu transporté par le premier dispositif de convoyeur (6, 10), dans lequel le premier tambour de confection (2) a un premier axe de rotation ;
■ prévoir un deuxième dispositif de convoyeur pour transporter un deuxième composant de pneu, lequel deuxième composant de pneu est différent du premier composant de pneu ;
■ prévoir une deuxième unité de confection (3) ayant un deuxième tambour de confection (4) ; placer le deuxième tambour de confection dans une position opérationnelle pour prélever le deuxième composant de pneu transporté par le deuxième dispositif de convoyeur, dans lequel le deuxième tambour de confection (4) a un deuxième axe de rotation,
■ prévoir des moyens de transfert (5) pour transférer des composants de pneu entre le premier (2) et le deuxième (4) tambour de confection,
■ déplacer verticalement au moins l'un des tambours de confection (2, 4) dans une position opérationnelle dans laquelle l'axe de rotation dudit tambour de confection n'est pas aligné, mais parallèle avec l'axe de rotation de l'autre tambour de confection placé dans une position opérationnelle en question.
